# EUROPEAN PATENT APPLICATION

(11) **EP 2 858 005 A1**
(43) Date of publication of application: **08.04.2015**
(21) Application number: 13306371.9
(22) Date of filing: 03.10.2013
(51) Int. Cl.: G06F 21/54

(54) **Integrity check of a non-readable instruction register**

(71) Applicant: Gemalto SA, 92190 Meudon (FR)
(72) Inventor: Villegas, Karine, 13705 La Ciotat (FR); Hamzi, Nabil, 13705 La Ciotat (FR)

(57) **Abstract**

The present invention relates to a method to check the integrity of the content of a non-readable instruction register (IR) in a hardware peripheral (HP), said instruction register (IR) comprising sensitive instructions (Is) for sensitive calculations using sensitive data (SD), said method being such that integrity check instructions (I_{IC}) to compute a significant representation (SR) from the sensitive data (SD) are interleaved (F3) among sensitive instructions (Is) in the instruction register (IR). This enable to compute said significant representation (SR) in parallel with the operations of the sensitive instructions (Is), and to compare (F4) it to a pre-calculated reference result (RR).

## Description

### FIELD OF THE INVENTION

The present invention relates to a method to check the integrity of the content of a non-readable instruction register (IR) in a hardware peripheral, said instruction register comprising instructions for sensitive calculations using sensitive data.

The invention also pertains to a hardware peripheral and a device using said method.

### BACKGROUND OF THE INVENTION

In components, in particular cryptography hardware peripheral, some hardware registers that contain sensitive and important data cannot be read. They are only accessible for write operations by a main microprocessor monitoring the components. Their integrity could thus not be checked. It is the case for example when crypto-processors operations are driven by pipelines which are filled by the main microprocessor. Such pipelines are instruction register (IR) that cannot be read.

In classical execution, classical software counter-measures against fault attacks could not be applied in hardware peripheral as only hardware manages such peripherals.

When an attacker introduces fault in an instruction register, there is currently no means to detect that the instruction register has been corrupted. In the case sensitive instructions are replaced by simple arithmetic operations or by none operations, the attacker can access the sensitive data manipulated during operations. This is a major security breach.

Indeed, there exist many solutions to check computation afterwards. Among those solutions, double computation enables to solve some attack scheme but, if the IR is permanently corrupted, this will not be detected. Inverse operations can also be implemented but it is often not applicable or too costly in case of complex operations such as modular exponentiation.

At last, diverse kinds of sensors and detectors can be used but, if they are not very close to the instruction register, they are not able to detect the attack.

Further alternative and advantageous solutions would, accordingly, be desirable in the art.

### SUMMARY OF THE INVENTION

The present invention aims at detecting the above-mentioned malicious attacks while not ruining the performance of the calculations performed according to the sensitive instructions.

The present invention is defined, in its broadest sense, as a method comprising the steps of
- receiving sensitive instructions and sensitive data,
- storing the sensitive data in a hardware peripheral accessible memory,
- storing the sensitive instructions in the non readable instruction register in the hardware peripheral and
- using sensitive instructions, performing sensitive calculations using sensitive data in said hardware peripheral,
said method further comprising the steps of:
- extracting a significant representation of said sensitive data,
- storing this significant representation as a reference result,
- interleaving integrity check instructions to compute said significant representation from the sensitive data among sensitive instructions in the instruction register,
- during the step of performing sensitive calculations, in parallel with the operations of the sensitive instructions, compute said significant representation from the sensitive data using integrity check instructions interleaved among sensitive instructions in the instruction register,
- comparing the result of the computation of the significant representation to the reference result, the integrity of sensitive instructions in instruction register being checked if said results are identical.

The invention proposes to have alternative computations that validate the parameters of the sensitive instructions. If said sensitive instructions have been corrupted, the invention enables to detect it with a probability depending on the frequency average of the interleaved instructions. As interleaved instructions can be elementary operations, the invention enables to check the integrity of non-readable registers while not diminishing the calculation resources.

Advantageously, said significant representation are chosen among the group formed by the size of the sensitive data, the number of bytes, the Hammings weight of the sensitive data or of its complement, the Non-Adjacent Form representation of the sensitive data, any operations on this values that can be computed on a bit-by-bit basis, said operations using or not a predetermined random number, a function calculated from words of said sensitive data...

Such significant representations are able to be recomputed using operations different from the sensitive ones, such operations being not costly in terms of calculation resources. Their computation also enables to have the lowest probability to be correct if instructions have been modified in the instruction register.

Operations using random number can be, for example, a multiplication of the sensitive data with the predetermined random number.

According to an advantageous embodiment of the invention, said calculation is the subtraction of the Hamming weight to the size in bits of the sensitive data.

This significant representation is very simple to calculate on a bit-by-bit basis using elementary operations in the instruction register which is a very favorable situation.

According to a specific feature of the invention, said sensitive data are protected, said sensitive calculation being such that the result is the same with sensitive data, protected or not.

This feature enables to protect data while they are transferred and manipulated.

The present invention also concerns a hardware peripheral implementing at least a non-readable instruction register to store sensitive instructions and a calculation unit to perform sensitive calculations using said sensitive instructions and sensitive data stored in a memory accessible to the hardware peripheral, said calculation unit being such that it computes, in parallel with sensitive calculations, a significant representation, from the sensitive data, by using integrity check instructions interleaved among sensitive instructions in the instruction register, the result of computation being intended to be compared in a comparator to a pre-calculated reference result.

Such a hardware peripheral enables to implement the invention.

According to a specific embodiment, said hardware peripheral comprises an extractor to extract a significant representation from received sensitive data, a memory to store the significant representation as a reference result, an interleaving function to interleave integrity computation instructions among sensitive instructions to be sent to the hardware peripheral and a comparator to compare it to the result of the computation of the significant representation received from the hardware peripheral, the integrity of the sensitive data and sensitive instructions being checked if said results are identical.

Such a hardware peripheral comprises the necessary entities to implement the steps of the method of the invention that are necessarily performed on board of the hardware peripheral.

At last the invention relates to a device having a processor and a hardware peripheral according to the invention, said processor sending at least sensitive instructions towards the instruction register of the hardware peripheral.

Such a device is protected according to the invention in a low cost and efficient way.

Advantageously, said processor comprises an extractor to extract a significant representation from received sensitive data, a memory to store the significant representation as a reference result, an interleaving function to interleave integrity computation instructions among sensitive instructions to be sent to the hardware peripheral and a comparator to compare it to the result of the computation of the significant representation received from the hardware peripheral, the integrity of the sensitive data and sensitive instructions being checked if said results are identical.

This feature corresponds to a first illustrative embodiment of the invention. A second illustrative embodiment consists in integrating all the steps of the method of the invention in the hardware peripheral itself.

Therefore, the method according to the present invention allows a better detection of malicious attacks than with the prior art techniques.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents schematically a device where the invention is implemented according to a first embodiment;
- Figure 2 represents schematically an environment where the invention is implemented according to a second preferred embodiment.

### DETAILED DESCRIPTION OF EMBODIMENTS OF THE INVENTION

The same elements have been designated with the same reference numerals in the different drawings. For clarity, only those elements and steps which are useful to the understanding of the present invention have been shown in the drawings and will be described.

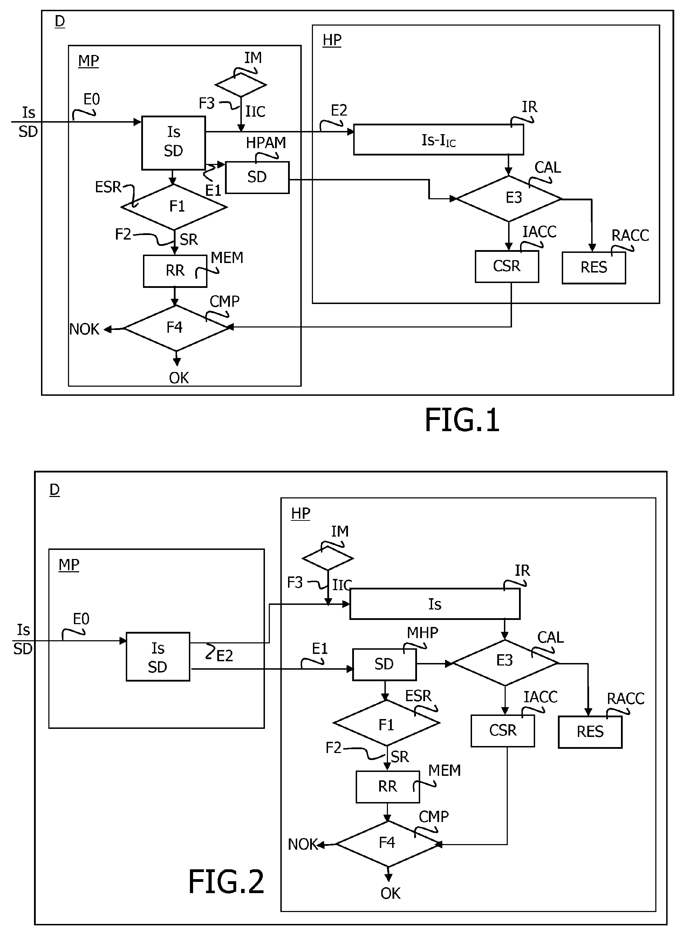

FIG. 1 schematically shows a device comprising a microprocessor MP and a hardware peripheral HP. The hardware peripheral HP includes at least a non-readable instruction register IR. The invention aims at checking the integrity of the content of this instruction register IR. Such instruction register IR lists sensitive instructions Is that consist in a sequence of operations to be performed on sensitive data SD. Such sensitive data SD are stored in a memory HPAM accessible by the hardware peripheral. This memory HPAM is represented in the microprocessor MP on figure 1 but can be located in another entity or in the hardware peripheral itself. It depends on the hardware peripheral HP architecture. When such instruction register IR is attacked, instructions inside can be modified and it can enable the attacker to access sensitive data SD.

According to the method of the invention, sensitive instructions Is and sensitive data SD are handled by the microprocessor MP. They are transferred towards the hardware peripheral HP, thanks to its instruction register IR and its accessible memory HPAM. In the hardware peripheral HP, sensitive instructions Is are stored in the non-readable instruction register IR and sensitive data SD are stored in the HP accessible memory HPAM.

According to the first embodiment of the invention, an extractor ESR extracts a significant representation SR of said sensitive data SD and the extracted value is stored as a reference result RR in a memory MEM.

According to the invention, the microprocessor MP fills the instruction register IR while interleaving integrity computation instruction I_{IC} to compute the significant representation SR from sensitive data SD among sensitive instructions Is using an interleaving function IM. This time, the significant representation SR is thus computed in the hardware peripheral HP and using the instruction register IR.

Operations are then performed by a calculator CAL, typically a crypto-processor, receiving the operations' sequence from the instruction register IR and accessing to sensitive data SD stored in the HP accessible memory HPAM.

Results of operations are stored in at least two different accumulators. At the end of the sequence of operations, the first one IACC contains the result CSR of the computation of the significant representation and the second one RACC contains a sensitive result RES obtained after performance of the sensitive instructions Is.

The result CSR of the computation of the significant representation with interleaved operations is then compared to the reference result RR in a comparator CMP. The output of the comparator CMP is an OK or a NOK for integrity of the instruction register IR. Depending on this comparator's output, the sensitive result RES is or not outputted from the hardware peripheral HP. Other countermeasures can be implemented depending on the comparator's output. Indeed, if the register IR containing the instructions for operations realized by the hardware peripheral has been attacked or data entering in the register IR has been attacked, the significant representation is not calculated correctly and the attack is detected by the comparison according to the invention.

Here it has to be noted that the reference result RR is shown stored in the microprocessor MP and the comparator CMP is implemented in the microprocessor. However, other implementations exist. For example the reference result RR can directly be sent to the hardware peripheral HP that would include the comparator CMP, or the reference result RR remains stored in the microprocessor MP but the comparator CMP is implemented in the hardware peripheral HP. Also in the example shown, it is the microprocessor that interleaves the integrity computation instructions hc among sensitive instructions. The interleaving could also been performed by the hardware peripheral HP that would thus have an interleaving function IM for this purpose.

Thus, figure 2 presents another embodiment where all the steps of the method of the invention are performed in the hardware peripheral HP itself. Here the microprocessor MP only forwards the received sensitive data SD and sensitive instructions Is to the hardware peripheral HP and more precisely, respectively, in an HP internal memory MHP and in a non-readable instruction register IR. Of course this internal memory MHP is a memory accessible by the hardware peripheral.

From the sensitive data SD stored in a protected memory MHP, an extractor ESR extracts a significant representation SR of the sensitive data SD as stored in the memory MHP. The extracted significant representation is stored as a reference result RR in a memory MEM. This memory MEM does not need to present the same level of protection than the one MHP including the sensitive data SD.

In this second embodiment, the interleaving of integrity computation instructions I_{IC} to compute the significant representation SR from the sensitive data as stored in protected memory MHP is performed inside the hardware peripheral HP itself. Then, the use of the instruction register IR for computation of a sensitive result RES and, in parallel, for the computation of the significant representation CSR is identical to the one described in the first embodiment.

However it is noted here that the calculator CAL, e.g. crypto-processor, itself can be used to perform the initial extraction of the significant representation SR being stored as reference result RR. In this case, entities ESR and CAL are technically speaking the same calculation means.

In an illustrative example, we could consider RSA encryption operation. The integrity of an exponent e, sensitive data to be used in a modular exponentiation and of the sensitive instructions (otherwise the plain text could be exposed), are checked according to the invention by processing the following instructions. It guarantees that modular operations are really executed.

First, in an initial phase, the microprocessor or the crypto-processor computes U = (|e| - HW(e))M mod N. Then integrity computation instructions I_{IC} are interleaved among sensitive instructions and sent to the crypto-coprocessor. In parallel of the modular exponentiation M^e mod N of a message M by the sensitive data e computed in the crypto-processor CAL, U is computed according to the following interleaved operations where ei is the i^{th} bit of exponent e:
- Init: IACC <- 0
- Loop on i:
   □ IACC <- IACC + M
   □ If(ei = 1)
- IACC <- IACC - M
- End: compare IACC with reference result RR.

A comparator CMP is thus implemented in the hardware peripheral HP or in the microprocessor. It receives the computed significant representation CSR stored in accumulator IACC and compares it to the reference result RR. If those values are not equals it means that errors are present in the instruction register.

The above described figures disclose devices. However they are also adapted to disclose the method of the invention.

Thus with references to these figures, the method of the invention comprises a step E0 of receiving sensitive data SD and sensitive instruction Is. In steps E1 and E2, sensitive data SD are stored in an HP accessible memory HPAM while sensitive instructions Is are stored in an instruction register IR.

In a step E3, operations corresponding to the instructions in instruction register IR are performed.

According to the invention, the method includes the step F1 of extracting a significant representation SR of said sensitive data SD. In a step F2, this extracted significant representation SR is stored in a memory MEM as a reference result RR.

According to the invention, in a step F3, integrity computation instructions I_{IC} are interleaved to compute said significant representation SR from the sensitive data SD among sensitive instructions Is in the instruction register IR. The step E3 is thus performed while also performing the operations of the integrity computation instructions I_{IC} among the operations of the sensitive instructions Is.

At last, a step F4 of comparing the reference result with the computed significant representation CSR is performed according to the method of the invention.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. In particular, it is to be understood that the location or arrangement of individual elements within each disclosed embodiment may be modified without departing from the spirit and scope of the invention. In particular the accessible memory as disclosed on figure 1 could be implemented inside the hardware peripheral while the other features of the invention would remain in the microprocessor. It is the case for the interleaving function and other features of the invention. Indeed, any intermediate sharing of the features can also be envisaged while remaining under the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method to check the integrity of the content of a non-readable instruction register (IR) in a hardware peripheral (HP), said instruction register (IR) comprising sensitive instructions (Is) for sensitive calculations using sensitive data (SD), said method comprising the steps of
- receiving (E0) sensitive instructions (Is) and sensitive data (SD),
- storing (E1) the sensitive data (SD) in a hardware peripheral accessible memory,
- storing (E2) the sensitive instructions (Is) in the non readable instruction register (IR) in the hardware peripheral (HP) and
- using sensitive instructions (Is), performing (E3) sensitive calculations using sensitive data (SD) in said hardware peripheral,
said method further comprising the steps of:
- extracting (F1) a significant representation (SR) of said sensitive data (SD),
- storing (F2) this significant representation (SR) as a reference result (RR),
- interleaving (F3) integrity check instructions (I_{IC}) to compute said significant representation (SR) from the sensitive data (SD) among sensitive instructions (Is) in the instruction register (IR),
- during the step (E3) of performing sensitive calculations, in parallel with the operations of the sensitive instructions (Is), compute said significant representation (SR) from the sensitive data (SD) using integrity check instructions (I_{IC}) interleaved among sensitive instructions (Is) in the instruction register (IR),
- comparing (F4) the result of the computation of the significant representation (CSR) to the reference result (RR), the integrity of sensitive instructions (Is) in instruction register (IR) being checked if said results are identical.

2. Method according to claim 1, wherein said significant representation (SR) is chosen among the group formed by the size of the sensitive data, the number of bytes, the Hammings weight of the sensitive data or of its complement, the Non-Adjacent Form representation of the sensitive data, any operations on this values that can be computed on a bit-by-bit basis, said operations using or not a predetermined random number, a function calculated from words of said sensitive data.

3. Method according to claim 2, wherein said calculation is the subtraction of the Hamming weight to the size in bits of the sensitive data.

4. Method according to one of the preceding claims, wherein said sensitive data are protected, said sensitive calculation being such that the result is the same with sensitive data, protected or not.

5. A hardware peripheral (HP) implementing at least a non-readable instruction register (IR) to store sensitive instructions (Is) and a calculation unit (CAL) to perform sensitive calculations using said sensitive instructions (Is) and sensitive data (SD) stored in a memory accessible to the hardware peripheral (HP), said calculation unit (CAL) being such that it computes, in parallel with sensitive calculations, a significant representation (SR), from the sensitive data (SD), by using integrity check instructions (I_{IC}) interleaved among sensitive instructions (Is) in the instruction register (IR), the result of computation (CSR) being intended to be compared in a comparator (CMP) to a pre-calculated reference result (RR).

6. Hardware peripheral according to claim 5, said hardware peripheral comprising an extractor (ESR) to extract a significant representation (SR) from received sensitive data (SD), a memory (MEM) to store the significant representation as a reference result (RR) , an interleaving function (IM) to interleave integrity computation instructions (I_{IC}) among sensitive instructions (Is) to be sent to the hardware peripheral (HP) and a comparator (CMP) to compare it to the result (CSR) of the computation of the significant representation received from the hardware peripheral (HP), the integrity of the sensitive data (SD) and sensitive instructions (Is) being checked if said results are identical.

7. Device (D) having a processor (MP) and a hardware peripheral (HP) according to claim 5, said processor (MP) sending sensitive instructions (Is) towards the instruction register (IR) of the hardware peripheral (HP).

8. Device according to claim 7, wherein said processor (MP) comprises an extractor (ESR) to extract a significant representation (SR) from received sensitive data (SD), a memory (MEM) to store the significant representation as a reference result (RR), an interleaving function (IM) to interleave integrity computation instructions (I_{IC}) among sensitive instructions (Is) to be sent to the hardware peripheral (HP) and a comparator (CMP) to compare it to the result (CSR) of the computation of the significant representation received from the hardware peripheral (HP), the integrity of the sensitive data (SD) and sensitive instructions (Is) being checked if said results are identical.
